# EUROPEAN PATENT APPLICATION

(11) **EP 4 796 767 A1**
(43) Date of publication of application: **26.08.2026**
(21) Application number: 26159383.4
(22) Date of filing: 18.02.2026
(51) Int. Cl.: F01N 3/20, F01N 9/00, F01N 11/00

(54) **EXHAUST MONITORING APPARATUS AND EXHAUST MONITORING METHOD**

(30) Priority: 25.02.2025 JP 2025028017
(71) Applicant: Toyota Jidosha Kabushiki Kaisha, Toyota-shi, Aichi-ken 471-8571 (JP)
(72) Inventor: MORIKAWA, Atsushi, Aichi-ken, 471-8571 (JP)
(74) Representative: D Young & Co LLP

(57) **Abstract**

An exhaust monitoring apparatus includes an exhaust purification device that removes nitrogen oxides, and a nitrogen oxide sensor that measures a concentration of nitrogen oxides contained in exhaust gas that has passed through the exhaust purification device. The exhaust monitoring apparatus acquires upstream and downstream concentrations. The upstream concentration is a concentration of nitrogen oxides contained in exhaust gas flowing into the exhaust purification device. The downstream concentration is an output value of the sensor. When the downstream concentration is greater than an upper limit value calculated from the upstream concentration, the exhaust monitoring apparatus outputs a processed concentration obtained by replacing the downstream concentration with the upper limit value, as a value indicating the concentration of the nitrogen oxides contained in the exhaust gas that has passed through the exhaust purification device.

## Description

### BACKGROUND

### 1. Field

The present disclosure relates to an exhaust monitoring apparatus and an exhaust monitoring method.

### 2. Description of Related Art

JP2023-8849A discloses an exhaust system. The exhaust system includes a nitrogen oxide sensor provided in an exhaust pipe. The sensor measures the concentration of nitrogen oxides (NOₓ) contained in exhaust gas in the engine.

In the exhaust system, exhaust gas may contain ammonia (NH₃). The nitrogen oxide sensor responds to NOₓ but also to NH₃. This may cause the output value of the nitrogen oxide sensor to exceed a value that reflects the concentration of NOₓ contained in the exhaust gas.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

An aspect of the present disclosure provides an exhaust monitoring apparatus in an exhaust system. The exhaust system includes an exhaust purification device disposed in an exhaust pipe of an engine and configured to remove nitrogen oxides contained in exhaust gas, and a nitrogen oxide sensor disposed downstream of the exhaust purification device in the exhaust pipe and configured to measure a concentration of nitrogen oxides contained in exhaust gas that has passed through the exhaust purification device. The exhaust monitoring apparatus is configured to acquire an upstream concentration that is a concentration of nitrogen oxides contained in exhaust gas flowing into the exhaust purification device, and a downstream concentration that is an output value of the nitrogen oxide sensor. The exhaust monitoring apparatus includes processing circuitry configured to, when the downstream concentration is less than or equal to an upper limit value calculated based on the upstream concentration, output the downstream concentration as a value indicating the concentration of the nitrogen oxides contained in the exhaust gas that has passed through the exhaust purification device, and, when the downstream concentration is greater than the upper limit value, output a processed concentration as the value indicating the concentration of the nitrogen oxides contained in the exhaust gas that has passed through the exhaust purification device. The processed concentration is obtained by replacing the downstream concentration with the upper limit value.

Another aspect of the present disclosure provides an exhaust monitoring apparatus in an exhaust system. The exhaust system includes an exhaust purification device disposed in an exhaust pipe of an engine and configured to remove nitrogen oxides contained in exhaust gas, and a nitrogen oxide sensor disposed downstream of the exhaust purification device in the exhaust pipe and configured to measure a concentration of nitrogen oxides contained in exhaust gas that has passed through the exhaust purification device. The exhaust monitoring apparatus is configured to acquire a downstream concentration that is an output value of the nitrogen oxide sensor. The exhaust monitoring apparatus includes processing circuitry configured to, when the downstream concentration is less than or equal to an upper limit value calculated based on a purification efficiency of the exhaust purification device, output the downstream concentration as a value indicating the concentration of the nitrogen oxides contained in the exhaust gas that has passed through the exhaust purification device, and, when the downstream concentration is greater than the upper limit value, output a processed concentration as the value indicating the concentration of the nitrogen oxides contained in the exhaust gas that has passed through the exhaust purification device. The processed concentration is obtained by replacing the downstream concentration with the upper limit value.

A further aspect of the present disclosure provides an exhaust monitoring method for an exhaust system. The exhaust system includes an exhaust purification device disposed in an exhaust pipe of an engine and configured to remove nitrogen oxides contained in exhaust gas, and a nitrogen oxide sensor disposed downstream of the exhaust purification device in the exhaust pipe and configured to measure a concentration of nitrogen oxides contained in exhaust gas that has passed through the exhaust purification device. The exhaust monitoring method includes acquiring an upstream concentration that is a concentration of nitrogen oxides contained in exhaust gas flowing into the exhaust purification device, acquiring a downstream concentration that is an output value of the nitrogen oxide sensor, when the downstream concentration is less than or equal to an upper limit value calculated based on the upstream concentration, outputting the downstream concentration as a value indicating the concentration of the nitrogen oxides contained in the exhaust gas that has passed through the exhaust purification device, and when the downstream concentration is greater than the upper limit value, outputting a processed concentration as the value indicating the concentration of the nitrogen oxides contained in the exhaust gas that has passed through the exhaust purification device. The processed concentration is obtained by replacing the downstream concentration with the upper limit value.

Other features and aspects will be apparent from the following detailed description, the drawings, and the claims.

### BRIEF DESCRIPTION OF THE DRAWINGS

Fig. 1 is a schematic view showing the configuration of a vehicle according to a first embodiment.
Fig. 2 is a timing diagram illustrating the changes in the upstream and downstream concentrations in a first example.
Fig. 3 is a timing diagram illustrating the changes in the upstream and downstream concentrations in a second example.
Fig. 4 is a flowchart illustrating a series of processes executed by the exhaust monitoring apparatus shown in Fig. 1 to calculate the downstream NOₓ concentration.
Fig. 5 is a timing diagram illustrating the changes in the upstream concentration, the downstream concentration, and the downstream NOₓ concentration in the second example.
Fig. 6 is a flowchart illustrating a series of processes executed by the exhaust monitoring apparatus shown in Fig. 1 to calculate the NOₓ amount.
Fig. 7 is a flowchart illustrating a series of processes executed by the exhaust monitoring apparatus according to a second embodiment to calculate the downstream NOₓ concentration.
Fig. 8 is a diagram illustrating how the exhaust monitoring apparatus of the second embodiment estimates the purification efficiency of the exhaust purification device.
Fig. 9 is a timing diagram illustrating the changes in the upstream concentration, the upper limit value, and the downstream concentration in the second embodiment.
Fig. 10 is a flowchart illustrating a series of processes executed by the exhaust monitoring apparatus according to a third embodiment to calculate the downstream NOₓ concentration.
Fig. 11 is a diagram illustrating how the exhaust monitoring apparatus of the third embodiment calculates an estimated value.
Fig. 12 is a flowchart illustrating a series of processes executed by the exhaust monitoring apparatus according to a fourth embodiment to calculate the downstream NOₓ concentration.
Fig. 13 is a schematic view showing the configuration of a vehicle according to a fifth embodiment.
Fig. 14 is a timing diagram illustrating the changes in the upstream concentration, the downstream concentration, and the second-stage downstream concentration in a third example.
Fig. 15 is a timing diagram illustrating the changes in the upstream concentration, the downstream concentration, and the second-stage downstream concentration in a fourth example.
Fig. 16 is a flowchart illustrating a series of processes executed by the exhaust monitoring apparatus of the fifth embodiment to calculate the second-stage downstream NOₓ concentration.
Fig. 17 is a timing diagram illustrating the changes in the upstream concentration, the downstream concentration, and the second-stage downstream concentration in the fourth example.
Fig. 18 is a timing diagram illustrating the changes in the upstream concentration, the downstream concentration, and the second-stage downstream NOₓ concentration in the fourth example.
Fig. 19 is a flowchart illustrating a series of processes executed by the exhaust monitoring apparatus according to a sixth embodiment to calculate the second-stage downstream NOₓ concentration.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### First Embodiment

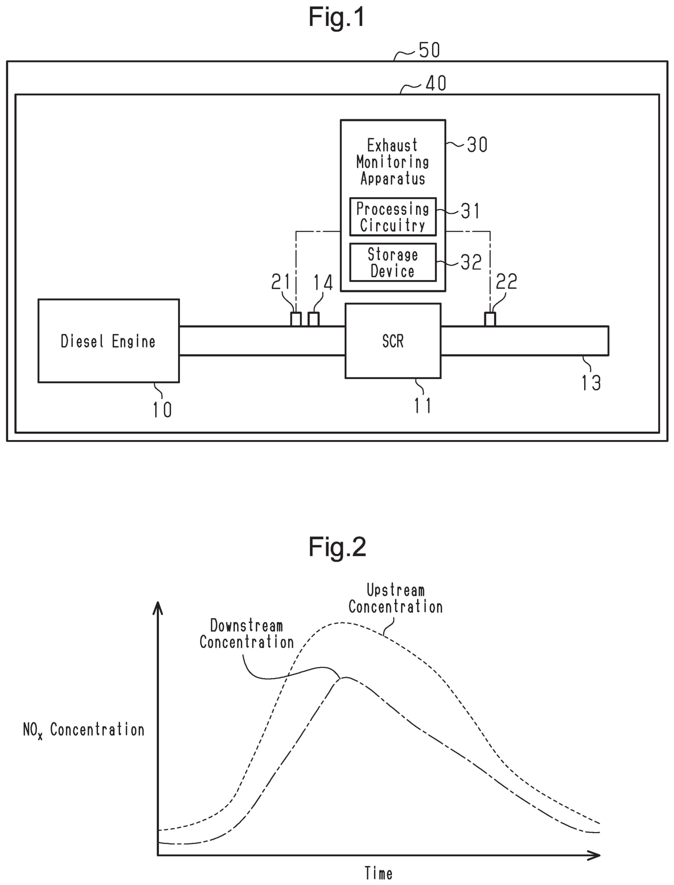

An exhaust monitoring apparatus of a first embodiment will now be described with reference to Figs. 1 to 6.

### Configuration of Vehicle 50

As shown in Fig. 1, a vehicle 50 includes an exhaust system 40. The exhaust system 40 includes a diesel engine 10, a selective catalytic reduction (SCR) catalyst 11, an exhaust pipe 13, an injector 14, a first nitrogen oxide sensor 21, a second nitrogen oxide sensor 22, and an exhaust monitoring apparatus 30.

The exhaust pipe 13 is connected to the diesel engine 10. The exhaust gas discharged from the diesel engine 10 is discharged out of the vehicle 50 through the exhaust pipe 13.

The SCR catalyst 11 is located at a position along the exhaust pipe 13. The SCR catalyst 11 is an exhaust purification device that removes nitrogen oxides (NOₓ) contained in exhaust gas. On the SCR catalyst 11, ammonia (NH₃) generated by the hydrolysis of urea is adsorbed. The SCR catalyst 11 reduces NOₓ in the exhaust gas using NH₃ as a reductant.

The first nitrogen oxide sensor 21 is disposed upstream of the SCR catalyst 11 in the exhaust pipe 13. The first nitrogen oxide sensor 21 measures the concentration of NOₓ contained in the exhaust gas flowing into the SCR catalyst 11.

Hereinafter, the first nitrogen oxide sensor 21 installed upstream of the SCR catalyst 11 will be referred to as an upstream nitrogen oxide sensor. Further, the concentration of NOₓ contained in the exhaust gas flowing into the SCR catalyst 11 will be referred to as an upstream concentration. The first nitrogen oxide sensor 21 outputs an upstream concentration.

The injector 14 is disposed downstream of the first nitrogen oxide sensor 21 and upstream of the SCR catalyst 11 in the exhaust pipe 13. The injector 14 adds urea to the SCR catalyst 11 by injecting urea water toward the SCR catalyst 11.

The second nitrogen oxide sensor 22 is disposed downstream of the SCR catalyst 11 in the exhaust pipe 13. The second nitrogen oxide sensor 22 measures the concentration of NOₓ contained in the exhaust gas that has passed through the SCR catalyst 11. Hereinafter, the concentration output by the second nitrogen oxide sensor 22 will be referred to as a downstream concentration.

The exhaust monitoring apparatus 30 includes processing circuitry 31 and a storage device 32. The storage device 32 stores a program. The processing circuitry 31 executes the program stored in the storage device 32 to execute various processes. The processing circuitry 31 includes a processor.

The exhaust monitoring apparatus 30 is connected to the first nitrogen oxide sensor 21 for communication. The exhaust monitoring apparatus 30 communicates with the first nitrogen oxide sensor 21 to periodically acquire the upstream concentration, which is the output value of the first nitrogen oxide sensor 21.

The exhaust monitoring apparatus 30 is connected to the second nitrogen oxide sensor 22 for communication. The exhaust monitoring apparatus 30 communicates with the second nitrogen oxide sensor 22 to periodically acquire the downstream concentration, which is the output value of the second nitrogen oxide sensor 22.

### Changes in the Upstream and Downstream Concentrations

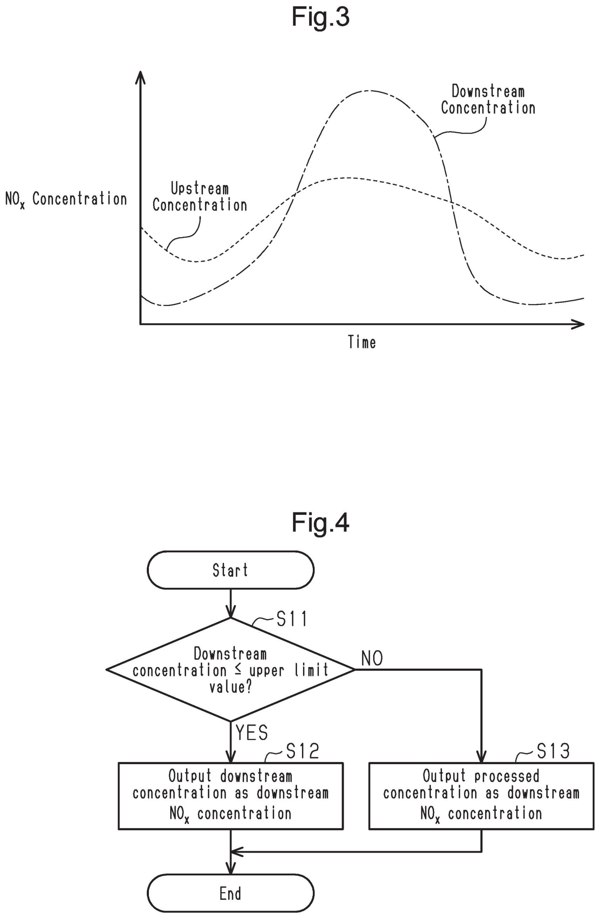

Figs. 2 and 3 each illustrate an example of changes in the upstream and downstream concentrations. In Figs. 2 and 3, the vertical axis represents the concentration of NOₓ, and the horizontal axis represents time. Hereinafter, the changes in shown in Fig. 2 are referred to as a first example, and those shown in Fig. 3 are referred to as a second example. In Figs. 2 and 3, the upstream concentration is indicated by the broken line, and the downstream concentration is indicated by the single-dashed line.

As shown in Fig. 2, in the first example, the upstream concentration varies over time while staying greater than the downstream concentration.

As described with reference to Fig. 1, the upstream concentration is the concentration of NOₓ contained in the exhaust gas flowing into the SCR catalyst 11, and is output by the first nitrogen oxide sensor 21. The downstream concentration is the concentration of NOₓ contained in the exhaust gas that has passed through the SCR catalyst 11, and is output by the second nitrogen oxide sensor 22.

The exhaust gas flowing into the SCR catalyst 11 undergoes a reduction in NOₓ as it passes through the SCR catalyst 11. That is, the amount of NOₓ contained in the exhaust gas flowing into the SCR catalyst 11 is greater than the amount of NOₓ contained in the exhaust gas after it passes through the SCR catalyst 11. Accordingly, as shown in the first example, the upstream concentration normally varies over time while staying greater than the downstream concentration.

As shown in Fig. 3, in the second example, the value of the downstream concentration is temporarily larger than that of the upstream concentration.

As described with reference to Fig. 1, NH₃ is adsorbed on the SCR catalyst 11. When the temperature of the SCR catalyst 11 increases, the NH₃ adsorbed on the SCR catalyst 11 is desorbed. In such a case, the exhaust gas that has passed through the SCR catalyst 11 comes to contain the NH₃ desorbed.

The nitrogen oxide sensor responds not only to NOₓ but also to NH₃, and outputs a value accordingly. As a result, when NH₃ desorbs from the SCR catalyst 11, the second nitrogen oxide sensor 22 responds not only to the NOₓ contained in the exhaust gas but also to the NH₃. Thus, as shown in the second example, the value of the downstream concentration may become larger than that of the upstream concentration.

In this case, the second nitrogen oxide sensor 22 outputs a value greater than the NOₓ concentration contained in the exhaust gas after it passes through the exhaust purification device, because it also responds to NH₃.

Flow of Series of Processes Executed by the Exhaust Monitoring Apparatus 30 to Output the Downstream NOₓ Concentration

As described above, the exhaust monitoring apparatus 30 outputs the downstream NOₓ concentration in consideration of a case where the value output by the second nitrogen oxide sensor 22 is excessive. The downstream NOₓ concentration is a value output by the exhaust monitoring apparatus 30 as indicating the concentration of NOₓ contained in the exhaust gas that has passed through the SCR catalyst 11.

Fig. 4 illustrates the flow of a series of processes executed when the exhaust monitoring apparatus 30 outputs the downstream NOₓ concentration. The series of processes illustrated in Fig. 4 is executed by the processing circuitry 31 when the exhaust monitoring apparatus 30 acquires the upstream and downstream concentrations. Hereinafter, S denotes a step.

Upon starting the series of processes illustrated in Fig. 4, the processing circuitry 31 first executes the process of S11. In the process of S11, the processing circuitry 31 determines whether the acquired downstream concentration is less than or equal to the upper limit value.

When the downstream concentration exceeds the upper limit value during calculation of the downstream NOₓ concentration, the exhaust monitoring apparatus 30 replaces the downstream concentration with the upper limit value. In the first embodiment, the upper limit value corresponds to the upstream concentration acquired at the same time as the downstream concentration.

When determining that the downstream concentration is less than or equal to the upper limit value in the process of S11 (S11: YES), the processing circuitry 31 advances the process to S12. In the process of S12, the processing circuitry 31 outputs the downstream concentration as the downstream NOₓ concentration. Then, the processing circuitry 31 terminates the series of processes illustrated in Fig. 4.

In this manner, when the acquired downstream concentration is less than or equal to the upper limit value, the exhaust monitoring apparatus 30 outputs the downstream concentration as the downstream NOₓ concentration.

When determining that the downstream concentration is greater than the upper limit value in the process of S11 (S11: NO), the processing circuitry 31 advances the process to S13. In the process of S13, the processing circuitry 31 outputs a processed concentration as the downstream NOₓ concentration. In the first embodiment, the processed concentration corresponds to a value obtained by replacing the downstream concentration with the upstream concentration. That is, in S13, the processing circuitry 31 outputs the upstream concentration as the downstream NOₓ concentration. Then, the processing circuitry 31 terminates the series of processes illustrated in Fig. 4.

In this manner, when the acquired downstream concentration exceeds the upper limit value, the exhaust monitoring apparatus 30 outputs the processed concentration, which is obtained by replacing the downstream concentration with the upper limit value, as the downstream NOₓ concentration.

### Changes in the Downstream NOₓ Concentration

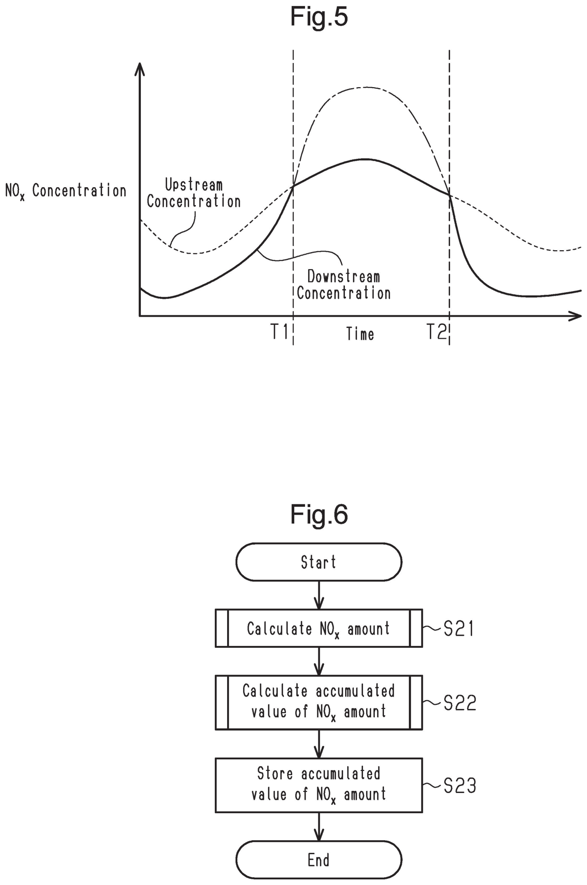

Fig. 5 illustrates an example of the changes in the downstream NOₓ concentration. In Fig. 5, the vertical axis represents the concentration of NOₓ, and the horizontal axis represents time.

Fig. 5 illustrates the changes in the upstream and downstream concentrations in the second example, which have been described with reference to Fig. 3. In Fig. 5, the upstream concentration is indicated by the broken line, and the downstream concentration is indicated by the single-dashed line.

Fig. 5 illustrates the changes in the downstream NOₓ concentration output by the exhaust monitoring apparatus 30 in the second example. In Fig. 5, the downstream NOₓ concentration output by the exhaust monitoring apparatus 30 is indicated by the solid line.

Until time T1 in Fig. 5, the downstream concentration remains less than or equal to the upstream concentration. Accordingly, when acquiring the upstream and downstream concentrations by time T1, the exhaust monitoring apparatus 30 determines that the downstream concentration is less than or equal to the upper limit value (S11: YES). Then, the exhaust monitoring apparatus 30 outputs the downstream concentration as the downstream NOₓ concentration (S12). Thus, in Fig. 5, until time T1, the solid line indicating the downstream NOₓ concentration overlaps the single-dashed line indicating the changes in the downstream concentration.

From time T1 to time T2 in Fig. 5, the downstream concentration is higher than the upstream concentration. Accordingly, when acquiring the upstream and downstream concentrations from time T1 to time T2, the exhaust monitoring apparatus 30 determines that the downstream concentration is greater than the upper limit value (S11: NO). Then, the exhaust monitoring apparatus 30 outputs the processed concentration as the downstream NOₓ concentration (S13). As described above, the processed concentration is a value obtained by replacing the downstream concentration with the upstream concentration, which corresponds to the upper limit value. Thus, in Fig. 5, from time T1 to time T2, the solid line indicating the downstream NOₓ concentration overlaps the broken line indicating the changes in the upstream concentration.

After time T2 in Fig. 5, the downstream concentration is less than or equal to the upstream concentration. Accordingly, when acquiring the upstream and downstream concentrations after time T2, the exhaust monitoring apparatus 30 determines that the downstream concentration is less than or equal to the upper limit value (S11: YES). Then, the exhaust monitoring apparatus 30 outputs the downstream concentration as the downstream NOₓ concentration (S12). Thus, in Fig. 5, after time T2, the solid line indicating the downstream NOₓ concentration overlaps the single-dashed line indicating the changes in the downstream concentration.

### Series of Processes Executed by the Exhaust Monitoring Apparatus 30 to Calculate NOₓ Amount

The exhaust monitoring apparatus 30 calculates the amount of NOₓ contained in exhaust gas. The NOₓ amount is the mass of NOₓ contained in exhaust gas.

Fig. 6 illustrates the flow of a series of processes executed by the exhaust monitoring apparatus 30 to calculate the amount of NOₓ contained in exhaust gas. The series of processes illustrated in Fig. 6 is executed by the processing circuitry 31 after the exhaust monitoring apparatus 30 calculates the downstream NOₓ concentration through the series of processes illustrated in Fig. 4.

Upon starting the series of processes illustrated in Fig. 6, the processing circuitry 31 first executes the process of S21. In the process of S21, the processing circuitry 31 calculates the amount of NOₓ contained in exhaust gas. For example, the processing circuitry 31 calculates the flow rate of the exhaust gas based on the output value of an air flow meter. The flow rate of the exhaust gas is a mass flow rate. Then, the processing circuitry 31 calculates the NOₓ amount based on the downstream NOₓ concentration and the flow rate of the exhaust gas. For example, the processing circuitry 31 calculates, as the amount of NOₓ contained in the exhaust gas, the product of the downstream NOₓ concentration and the flow rate of the exhaust gas.

Subsequently, the processing circuitry 31 executes the process of S22. In the process of S22, the processing circuitry 31 calculates an accumulated value of the amount of NOₓ. Each time the exhaust monitoring apparatus 30 calculates the accumulated value of the NOₓ amount, the exhaust monitoring apparatus 30 stores the calculated accumulated value in the storage device 32. In the process of S22, the processing circuitry 31 calculates the accumulated value of the NOₓ amount at the current time by adding the NOₓ amount calculated in the process of S21 to the previously-calculated accumulated value of the NOₓ amount stored in the storage device 32. Then, the processing circuitry 31 advances the process to S23.

In the process of S23, the processing circuitry 31 stores the current accumulated value of the NOₓ amount calculated in the process of S22 in the storage device 32. Then, the processing circuitry 31 terminates the series of processes illustrated in Fig. 6.

In this manner, each time the processing circuitry 31 calculates the downstream NOₓ concentration, the processing circuitry 31 calculates the NOₓ amount and stores the accumulated value of the NOₓ amount in the storage device 32. For example, after the vehicle 50 completes travel, the exhaust monitoring apparatus 30 calculates the NOₓ amount per unit travel distance by dividing the accumulated value of the calculated NOₓ amount by the distance traveled by the vehicle 50.

### Operation of the First Embodiment

Since the amount of NOₓ in exhaust gas is reduced by the SCR catalyst 11, which is an exhaust purification device, the downstream concentration becomes smaller than the upstream concentration. The exhaust monitoring apparatus 30 corrects the output value of the second nitrogen oxide sensor 22 using, as the upper limit value, a value calculated based on the upstream concentration.

### Advantages of the Present Embodiment

(1-1) The exhaust monitoring apparatus 30 prevents an excessively large output value from being obtained from the second nitrogen oxide sensor 22.
(1-2) The upstream concentration corresponds to an output value of the first nitrogen oxide sensor 21. The first nitrogen oxide sensor 21 is the upstream nitrogen oxide sensor that is installed upstream of the SCR catalyst 11 (i.e., the exhaust purification device) in the exhaust pipe 13 and measures the concentration of nitrogen oxides contained in the exhaust gas flowing into the SCR catalyst 11. This allows the exhaust monitoring apparatus 30 to acquire the upstream concentration.

### Second Embodiment

The vehicle 50 including the exhaust monitoring apparatus 30 according to a second embodiment will now be described with reference to the drawings. The second embodiment is different from the first embodiment in that the exhaust monitoring apparatus 30 calculates the upper limit value in consideration of the purification efficiency of the exhaust purification device. The following description focuses on differences from the first embodiment, and identical portions are briefly described or omitted.

### Flow of Series of Processes Executed by the Exhaust Monitoring Apparatus 30 to Output the Downstream NOₓ Concentration

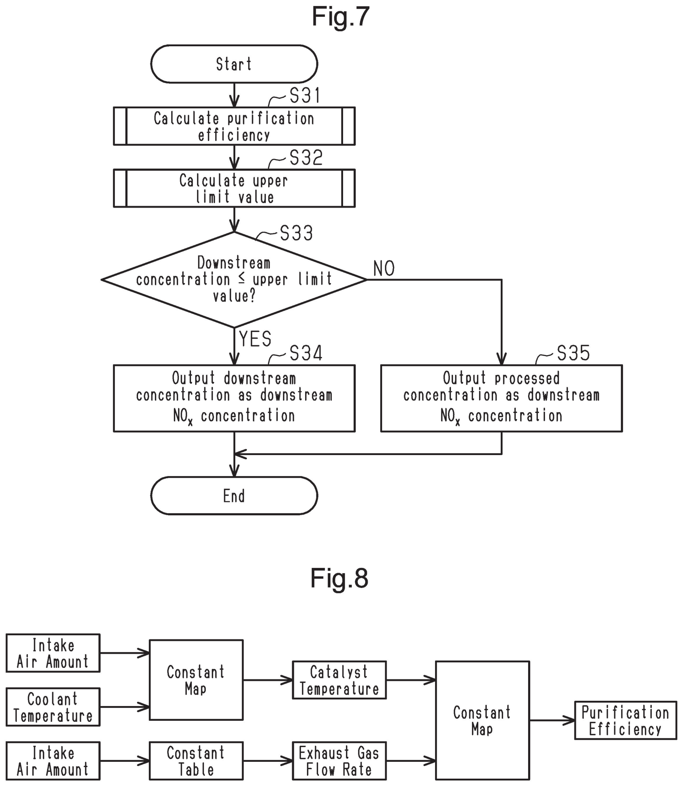

Fig. 7 illustrates the flow of a series of processes executed when the exhaust monitoring apparatus 30 of the second embodiment outputs the downstream NOₓ concentration. The series of processes illustrated in Fig. 7 is executed by the processing circuitry 31 when the exhaust monitoring apparatus 30 acquires the upstream and downstream concentrations. The exhaust monitoring apparatus 30 of the second embodiment executes the series of processes illustrated in Fig. 7 instead of those shown in Fig. 4 when the exhaust monitoring apparatus 30 acquires the upstream and downstream concentrations.

Upon starting the series of processes illustrated in Fig. 7, the processing circuitry 31 first executes the process of S31. In the process of S31, the processing circuitry 31 calculates the purification efficiency of the SCR catalyst 11.

Fig. 8 illustrates how the processing circuitry 31 calculates the purification efficiency of the SCR catalyst 11. As shown in Fig. 8, the processing circuitry 31 estimates the purification efficiency of the SCR catalyst 11 based on a catalyst temperature and the flow rate of exhaust gas.

The catalyst temperature is the temperature of the SCR catalyst 11. The exhaust monitoring apparatus 30 stores, in the storage device 32, a constant map that outputs the catalyst temperature in response to an input of the intake air amount and the temperature of coolant in the diesel engine 10 at the start of traveling of the vehicle 50. For example, the processing circuitry 31 acquires the intake air amount by acquiring the output value of the air flow meter. The processing circuitry 31 acquires the temperature of coolant from, for example, a temperature sensor installed in the diesel engine 10. Then, the processing circuitry 31 outputs the catalyst temperature by inputting the acquired intake air amount and coolant temperature to the constant map.

The exhaust monitoring apparatus 30 stores, in the storage device 32, a constant table that outputs the flow rate of exhaust gas in response to an input of the intake air amount. The processing circuitry 31 outputs the flow rate of exhaust gas by inputting the acquired intake air amount to the constant table.

The exhaust monitoring apparatus 30 stores, in the storage device 32, a constant map that outputs the purification efficiency of the SCR catalyst 11 in response to an input of the catalyst temperature and the flow rate of exhaust gas. The processing circuitry 31 calculates the purification efficiency of the SCR catalyst 11 by inputting the catalyst temperature and the flow rate of exhaust gas to the constant map.

As shown in Fig. 7, after calculating the purification efficiency of the SCR catalyst 11, the processing circuitry 31 executes the process of S32. In S32, the processing circuitry 31 calculates an upper limit value.

In the second embodiment, the exhaust monitoring apparatus 30 uses, as the upper limit value, a value obtained by reflecting the purification efficiency of the SCR catalyst 11 on the upstream concentration output by the first nitrogen oxide sensor 21. In the process of S32, the processing circuitry 31 calculates, as the upper limit value, a value obtained by subtracting the product of the upstream concentration and the purification efficiency of the SCR catalyst 11 from the upstream concentration output by the first nitrogen oxide sensor 21. Then, the processing circuitry 31 advances the process to S33.

In the process of S33, the processing circuitry 31 determines whether the obtained downstream concentration is less than or equal to the upper limit value calculated in the process of S32.

When determining that the downstream concentration is less than or equal to the upper limit value in the process of S33 (S33: YES), the processing circuitry 31 advances the process to S34. In the process of S34, the processing circuitry 31 outputs the downstream concentration as the downstream NOₓ concentration. Then, the processing circuitry 31 terminates the series of processes illustrated in Fig. 7.

In this manner, when the acquired downstream concentration is less than or equal to the upper limit value, the exhaust monitoring apparatus 30 outputs the downstream concentration as the downstream NOₓ concentration.

When determining that the downstream concentration is greater than the upper limit value in the process of S33 (S33: NO), the processing circuitry 31 advances the process to S35. In the process of S35, the processing circuitry 31 outputs the processed concentration as the downstream NOₓ concentration. The processed concentration is a value obtained by replacing the downstream concentration with the upper limit value. In S35, the processing circuitry 31 outputs, as the downstream NOₓ concentration, the upper limit value calculated in the process of S32. Then, the processing circuitry 31 terminates the series of processes illustrated in Fig. 7.

In this manner, when the acquired downstream concentration exceeds the upper limit value, the exhaust monitoring apparatus 30 outputs the processed concentration, which is obtained by replacing the downstream concentration with the upper limit value, as the downstream NOₓ concentration.

### Changes in the Downstream NOₓ Concentration

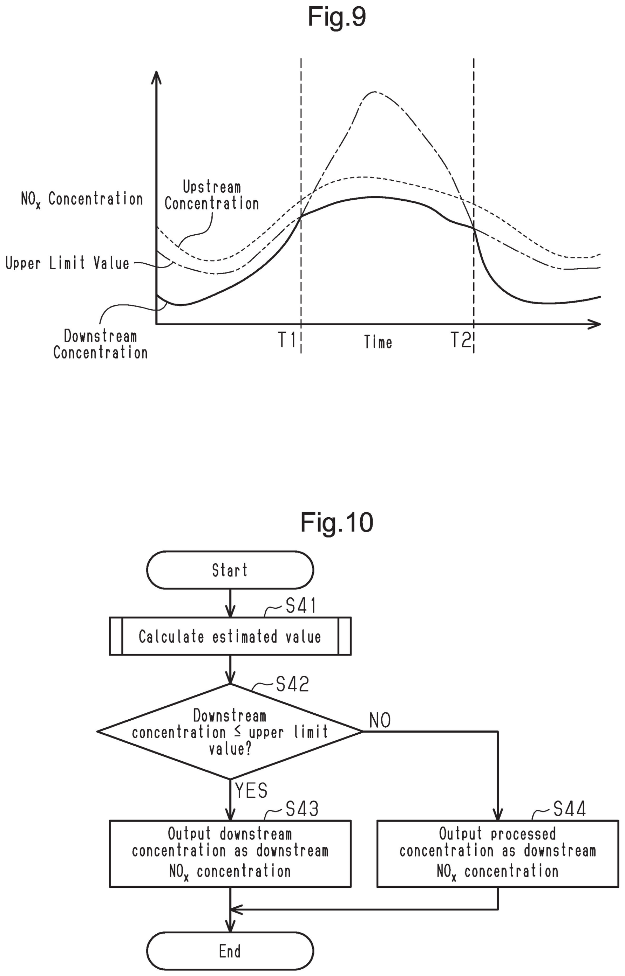

Fig. 9 illustrates an example of the changes in the downstream NOₓ concentration in the second embodiment. In Fig. 9, the vertical axis represents the concentration of NOₓ, and the horizontal axis represents time.

Fig. 9 shows the changes in the upstream and downstream concentrations. In Fig. 9, the upstream concentration is indicated by the broken line, and the downstream concentration is indicated by the single-dashed line.

Fig. 9 shows the changes in the upper limit value. The upper limit value shown in Fig. 9 is calculated by the exhaust monitoring apparatus 30 in the process of S32 based on the upstream concentration and the NOₓ purification efficiency of the SCR catalyst 11. In Fig. 9, the upper limit value calculated by the exhaust monitoring apparatus 30 is indicated by the double-dashed line.

In Fig. 9, the downstream NOₓ concentration output by the exhaust monitoring apparatus 30 is indicated by the solid line.

Until time T1 in Fig. 9, the downstream concentration remains less than or equal to the upper limit value. Accordingly, when acquiring the upstream and downstream concentrations by time T1, the exhaust monitoring apparatus 30 determines that the downstream concentration is less than or equal to the upper limit value (S33: YES). Then, the exhaust monitoring apparatus 30 outputs the downstream concentration as the downstream NOₓ concentration (S34). Thus, in Fig. 9, until time T1, the solid line indicating the downstream NOₓ concentration overlaps the single-dashed line indicating the changes in the downstream concentration.

From time T1 to time T2 in Fig. 9, the downstream concentration remains higher than the upper limit value. Accordingly, when acquiring the upstream and downstream concentrations from time T1 to time T2, the exhaust monitoring apparatus 30 determines that the downstream concentration is greater than the upper limit value (S33: NO). Then, the exhaust monitoring apparatus 30 outputs the processed concentration as the downstream NOₓ concentration (S35). As described above, the processed concentration is a value obtained by replacing the downstream concentration with the upper limit value. Thus, in Fig. 9, from time T1 to time T2, the solid line indicating the downstream NOₓ concentration overlaps the double-dashed line indicating the changes in the upper limit value.

After time T2 in Fig. 9, the downstream concentration is less than or equal to the upper limit value. Accordingly, when acquiring the upstream and downstream concentrations after time T2, the exhaust monitoring apparatus 30 determines that the downstream concentration is less than or equal to the upper limit value (S33: YES). Then, the exhaust monitoring apparatus 30 outputs the downstream concentration as the downstream NOₓ concentration (S34). Thus, in Fig. 9, after time T2, the solid line indicating the downstream NOₓ concentration overlaps the single-dashed line indicating the changes in the downstream concentration.

In the first embodiment, the upstream concentration is used as the upper limit value. In the second embodiment, the value obtained by reflecting the purification efficiency of the SCR catalyst 11 on the upstream concentration is used as the upper limit value. Thus, the upper limit value in the second embodiment is smaller than that in the first embodiment.

The downstream NOₓ concentration is output such that its value does not become larger than the upper limit value. Accordingly, the downstream NOₓ concentration calculated in the second embodiment is smaller than that calculated in the first embodiment.

### Operation and Advantages of the Second Embodiment

(2-1) The exhaust monitoring apparatus 30 of the second embodiment achieves advantages (1-1) and (1-2) in the first embodiment.

(2-2) In the exhaust monitoring apparatus 30 of the second embodiment, the processing circuitry 31 calculates the upper limit value based on the nitrogen oxide purification efficiency of the SCR catalyst 11, which is an exhaust purification device, and the upstream concentration.

The exhaust monitoring apparatus 30 of the second embodiment reflects the purification efficiency of the SCR catalyst 11, which is an exhaust purification device, on the upper limit value. Thus, the exhaust monitoring apparatus 30 prevents an excessively large output value from being obtained from the second nitrogen oxide sensor 22.

(2-3) The exhaust monitoring apparatus 30 corrects the output value of the second nitrogen oxide sensor 22 using, as the upper limit value, a value calculated based on the purification efficiency of the SCR catalyst 11, which is an exhaust purification device. Thus, the exhaust monitoring apparatus 30 prevents an excessively large output value from being obtained from the second nitrogen oxide sensor 22.

### Third Embodiment

The vehicle 50 including the exhaust monitoring apparatus 30 according to a third embodiment will now be described with reference to the drawings. The third embodiment is different from the first embodiment in that the exhaust monitoring apparatus 30 uses not the output value of the first nitrogen oxide sensor 21 but an estimated value as the upper limit value. The following description focuses on differences from the first embodiment, and identical portions are briefly described or omitted.

### Flow of Series of Processes Executed by the Exhaust Monitoring Apparatus 30 to Output the Downstream NOₓ Concentration

Fig. 10 illustrates the flow of a series of processes executed when the exhaust monitoring apparatus 30 of the third embodiment outputs the downstream NOₓ concentration. The series of processes illustrated in Fig. 10 is executed by the processing circuitry 31 when the exhaust monitoring apparatus 30 acquires the downstream concentration. The exhaust monitoring apparatus 30 of the third embodiment executes the series of processes illustrated in Fig. 10 instead of those shown in Fig. 4 when the exhaust monitoring apparatus 30 acquires the downstream concentration.

Upon starting the series of processes illustrated in Fig. 10, the processing circuitry 31 first executes the process of S41. In the process of S41, the processing circuitry 31 calculates an estimated value. The estimated value refers to an estimated value of the concentration of NOₓ contained in the exhaust gas flowing into the SCR catalyst 11.

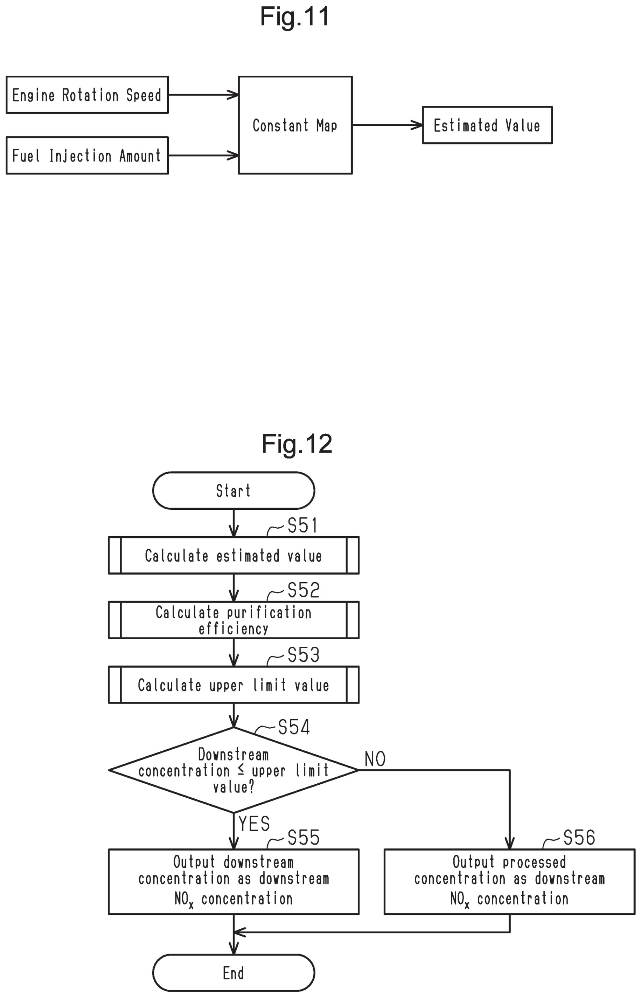

Fig. 11 illustrates how the processing circuitry 31 calculates the estimated value. As shown in Fig. 11, the processing circuitry 31 calculates the estimated value based on an engine rotation speed and a fuel injection amount.

The engine rotation speed represents the number of revolutions of the diesel engine 10 per unit time. For example, the processing circuitry 31 obtains an output value from a crank angle sensor that measures the crankshaft angle of the diesel engine 10, and outputs the engine rotation speed based on the time required for the crankshaft to rotate through a predetermined angle.

The fuel injection amount is the amount of fuel injected per injection event by a fuel injection valve that injects fuel in the diesel engine 10. The processing circuitry 31 obtains information on the fuel injection amount, for example, from a controller that controls the fuel injection valve.

The exhaust monitoring apparatus 30 stores, in the storage device 32, a constant map that outputs the estimated value in response to inputs of the engine rotation speed and the fuel injection amount. The processing circuitry 31 calculates the estimated value by inputting the obtained engine rotation speed and the fuel injection amount into the constant map.

The exhaust monitoring apparatus 30 of the third embodiment uses, as the upstream concentration, not the output value of the first nitrogen oxide sensor 21, but the estimated value output in the process of S41. Accordingly, the exhaust system 40 of the third embodiment does not have to include the first nitrogen oxide sensor 21.

As illustrated in Fig. 10, upon calculating the estimated value, the processing circuitry 31 executes the process of S42. In the process of S42, the processing circuitry 31 determines whether the obtained downstream concentration is less than or equal to the upper limit value. In other words, in the process of S42, the processing circuitry 31 determines whether the acquired downstream concentration is less than or equal to the estimated value calculated in the process of S41.

When determining that the downstream concentration is less than or equal to the upper limit value in the process of S42 (S42: YES), the processing circuitry 31 advances the process to S43. In the process of S43, the processing circuitry 31 outputs the downstream concentration as the downstream NOₓ concentration. Then, the processing circuitry 31 terminates the series of processes illustrated in Fig. 10.

In this manner, when the acquired downstream concentration is less than or equal to the upper limit value, the exhaust monitoring apparatus 30 outputs the downstream concentration as the downstream NOₓ concentration.

When determining that the downstream concentration is greater than the upper limit value in the process of S42 (S42: NO), the processing circuitry 31 advances the process to S44. In the process of S44, the processing circuitry 31 outputs the processed concentration as the downstream NOₓ concentration. The processed concentration is a value obtained by replacing the downstream concentration with the upper limit value. In the process of S44, the processing circuitry 31 outputs, as the downstream NOₓ concentration, the estimated value calculated in the process of S41. Then, the processing circuitry 31 terminates the series of processes illustrated in Fig. 10.

As described above, when the obtained downstream concentration exceeds the estimated value, which is the upper limit value, the exhaust monitoring apparatus 30 outputs the processed concentration obtained by replacing the downstream concentration with the upper limit value as the downstream NOₓ concentration.

### Operation and Advantages of Third Embodiment

(3-1) The exhaust monitoring apparatus 30 of the third embodiment achieves advantage (1-1) in the first embodiment.

(3-2) The upstream concentration is the estimated value calculated based on the rotation speed of the diesel engine 10, which corresponds to the engine, and the fuel injection amount. This allows the exhaust monitoring apparatus 30 of the third embodiment to acquire the upstream concentration.

### Fourth Embodiment

The vehicle 50 including the exhaust monitoring apparatus 30 according to a fourth embodiment will now be described with reference to the drawings. The fourth embodiment is different from the third embodiment in that the upper limit value is a value obtained by reflecting, on the estimated value, the purification efficiency of the exhaust purification device. The following description focuses on differences from the third embodiment, and identical portions are briefly described or omitted.

Flow of Series of Processes Executed by the Exhaust Monitoring Apparatus 30 to Output the Downstream NOₓ Concentration

Fig. 12 illustrates the flow of a series of processes executed when the exhaust monitoring apparatus 30 of the fourth embodiment outputs the downstream NOₓ concentration. The series of processes illustrated in Fig. 12 is executed by the processing circuitry 31 when the exhaust monitoring apparatus 30 acquires the downstream concentration. The exhaust monitoring apparatus 30 of the fourth embodiment executes the series of processes illustrated in Fig. 12 instead of those shown in Fig. 4 when the exhaust monitoring apparatus 30 acquires the downstream concentration.

Upon starting the series of processes illustrated in Fig. 12, the processing circuitry 31 first executes the process of S51. In the process of S51, the processing circuitry 31 calculates the estimated value. The estimated value refers to an estimated value of the concentration of NOₓ contained in the exhaust gas flowing into the SCR catalyst 11. The processing circuitry 31 calculates the estimated value in the manner described with reference to Fig. 11. Then, the processing circuitry 31 advances the process to S52.

The exhaust monitoring apparatus 30 of the fourth embodiment uses a value reflecting the estimated value as the upstream concentration. Accordingly, in the same manner as the third embodiment, the exhaust system 40 of the fourth embodiment does not have to include the first nitrogen oxide sensor 21.

In the process of S52, the processing circuitry 31 calculates the purification efficiency of the SCR catalyst 11. The processing circuitry 31 calculates the purification efficiency of the SCR catalyst 11 in the manner described with reference to Fig. 8. Then, the processing circuitry 31 advances the process to S53.

In the process of S53, the processing circuitry 31 calculates the upper limit value. In the fourth embodiment, the exhaust monitoring apparatus 30 uses, as the upper limit value, a value obtained by reflecting the purification efficiency of the SCR catalyst 11 on the estimated value. The processing circuitry 31 calculates, as the upper limit value, a value obtained by subtracting the product of the estimated value and the purification efficiency of the SCR catalyst 11 from the estimated value in the process of S53. Then, the processing circuitry 31 advances the process to S54.

In the process of S54, the processing circuitry 31 determines whether the obtained downstream concentration is less than or equal to the upper limit value calculated in the process of S53.

When determining that the downstream concentration is less than or equal to the upper limit value in the process of S54 (S54: YES), the processing circuitry 31 advances the process to S55. In the process of S55, the processing circuitry 31 outputs the downstream concentration as the downstream NOₓ concentration. Then, the processing circuitry 31 terminates the series of processes illustrated in Fig. 12.

In this manner, when the acquired downstream concentration is less than or equal to the upper limit value, the exhaust monitoring apparatus 30 outputs the downstream concentration as the downstream NOₓ concentration.

When determining that the downstream concentration is greater than the upper limit value in the process of S54 (S54: NO), the processing circuitry 31 advances the process to S56. In the process of S56, the processing circuitry 31 outputs the processed concentration as the downstream NOₓ concentration. The processed concentration is a value obtained by replacing the downstream concentration with the upper limit value. In S56, the processing circuitry 31 outputs, as the downstream NOₓ concentration, the upper limit value calculated in the process of S53. Then, the processing circuitry 31 terminates the series of processes illustrated in Fig. 12.

In this manner, when the acquired downstream concentration exceeds the upper limit value, the exhaust monitoring apparatus 30 outputs the processed concentration, which is obtained by replacing the downstream concentration with the upper limit value, as the downstream NOₓ concentration.

### Operation and Advantages of Fourth Embodiment

(4-1) The exhaust monitoring apparatus 30 of the fourth embodiment achieves advantage (1-1) in the first embodiment.

(4-2) The exhaust monitoring apparatus 30 of the fourth embodiment achieves advantages (2-2) and (2-3) in the second embodiment.

(4-3) The exhaust monitoring apparatus 30 of the fourth embodiment achieves advantage (3-2) in the third embodiment.

### Fifth Embodiment

The vehicle 50 including the exhaust monitoring apparatus 30 according to a fifth embodiment will now be described with reference to the drawings. The fifth embodiment is different from the first embodiment in that the exhaust system 40 includes a second-stage exhaust purification device. The following description focuses on differences from the first embodiment, and identical portions are briefly described or omitted.

### Configuration of Vehicle 50 of Fifth Embodiment

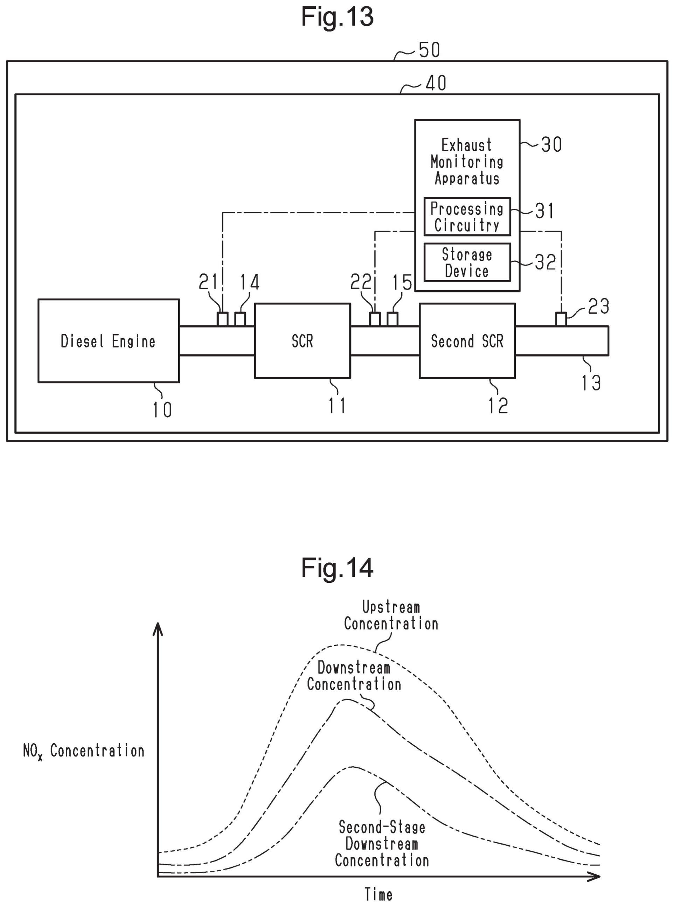

As shown in Fig. 13, in the vehicle 50 of the fifth embodiment, the exhaust system 40 includes a second SCR catalyst 12, a second injector 15, and a third nitrogen oxide sensor 23.

As shown in Fig. 13, the second SCR catalyst 12 is disposed downstream of the SCR catalyst 11 and the second nitrogen oxide sensor 22 in the exhaust pipe 13. For the second SCR catalyst 12, the term "SCR" has the same meaning as in the SCR catalyst 11. The second SCR catalyst 12 is a second-stage exhaust purification device that removes NOₓ contained in the exhaust gas that has passed through the exhaust purification device. On the second SCR catalyst 12, NH₃ generated by the hydrolysis of urea is adsorbed. The second SCR catalyst 12 reduces NOₓ in the exhaust gas using NH₃ as a reductant.

As shown in Fig. 13, the second injector 15 is disposed downstream of the second nitrogen oxide sensor 22 and upstream of the second SCR catalyst 12 in the exhaust pipe 13. The second injector 15 adds urea to the second SCR catalyst 12 by injecting urea water toward the second SCR catalyst 12.

As shown in Fig. 13, the third nitrogen oxide sensor 23 is disposed downstream of the second SCR catalyst 12 in the exhaust pipe 13. The third nitrogen oxide sensor 23 measures the concentration of NOₓ contained in the exhaust gas that has passed through the second SCR catalyst 12, which is the second-stage exhaust purification device. Hereinafter, the concentration output by the third nitrogen oxide sensor 23 will be referred to as a second-stage downstream concentration.

The exhaust monitoring apparatus 30 is connected to the third nitrogen oxide sensor 23 for communication. The exhaust monitoring apparatus 30 communicates with the third nitrogen oxide sensor 23 to periodically acquire the second-stage downstream concentration, which is the output value of the third nitrogen oxide sensor 23.

### Changes in the Upstream and Downstream Concentrations

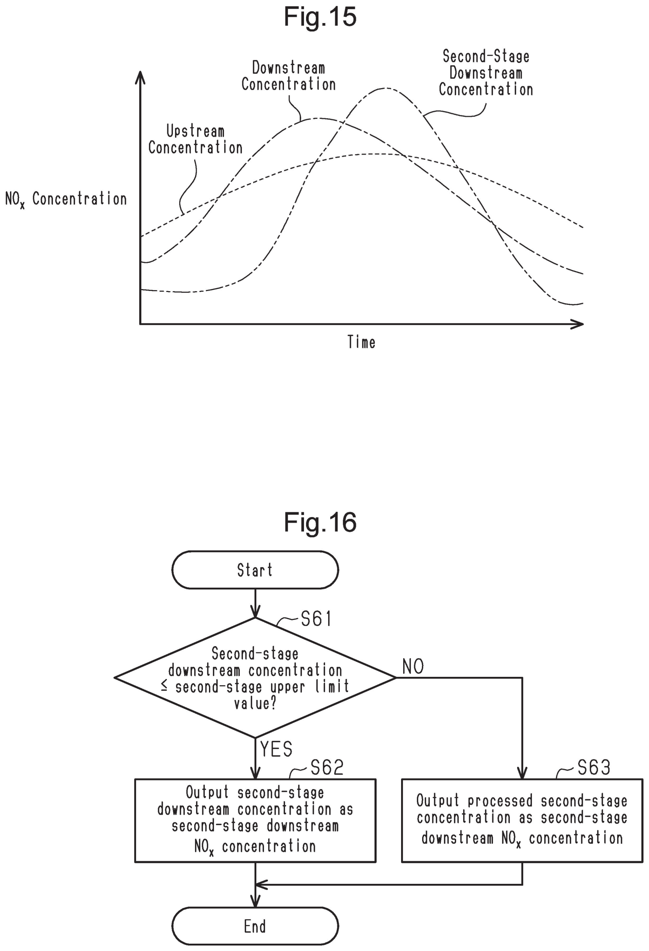

Figs. 14 and 15 each illustrate an example of the changes in the upstream concentration, the downstream concentration, and the second-stage downstream concentration. In Figs. 14 and 15, the vertical axis represents the concentration of NOₓ, and the horizontal axis represents time. Hereinafter, the changes shown in Fig. 14 are referred to as a third example, and those shown in Fig. 15 are referred to as a fourth example. In Figs. 14 and 15, the upstream concentration is indicated by the broken line, the downstream concentration is indicated by the single-dashed line, and the second-stage downstream concentration is indicated by the double-dashed line.

As shown in Fig. 14, in the third example, the upstream concentration varies over time while staying greater than the downstream concentration. Further, in the third example, the downstream concentration varies over time while staying greater than the second-stage downstream concentration.

As already explained using the first example shown in Fig. 2, the upstream concentration normally varies over time while staying greater than the downstream concentration.

The downstream concentration is the concentration of NOₓ contained in the exhaust gas that has passed through the SCR catalyst 11, and is output from the second nitrogen oxide sensor 22. The exhaust gas that has passed through the SCR catalyst 11 flows into the second SCR catalyst 12. Thus, the downstream concentration is the concentration of NOₓ contained in the exhaust gas flowing into the second SCR catalyst 12. The second-stage downstream concentration is the concentration of NOₓ contained in the exhaust gas that has passed through the second SCR catalyst 12, and is output by the third nitrogen oxide sensor 23.

When the exhaust gas flowing into the second SCR catalyst 12 passes through the second SCR catalyst 12, the amount of NOₓ decreases. That is, the amount of NOₓ contained in the exhaust gas flowing into the second SCR catalyst 12 is larger than the amount of NOₓ contained in the exhaust gas that has passed through the second SCR catalyst 12. Accordingly, as shown in the third example, the normal relationship among the concentrations is that the upstream concentration is the largest, followed by the downstream concentration, with the second-stage downstream concentration being the smallest.

As shown in Fig. 15, in the fourth example, the value of the downstream concentration is temporarily larger than that of the upstream concentration. The reason for this has already been explained using the second example shown in Fig. 3.

As shown in Fig. 15, in the fourth example, the value of the second-stage downstream concentration is temporarily larger than those of the upstream and downstream concentrations.

In the same manner the SCR catalyst 11, NH₃ is adsorbed on the second SCR catalyst 12. When the temperature of the second SCR catalyst 12 increases, the NH₃ adsorbed on the second SCR catalyst 12 is desorbed. In this case, the exhaust gas that has passed through the second SCR catalyst 12 comes to contain the NH₃ desorbed.

If NH₃ desorbs from the SCR catalyst 11 while the temperature of the second SCR catalyst 12 remains relatively high, the NH₃ desorbed from the SCR catalyst 11 cannot be adsorbed onto the second SCR catalyst 12 and passes through it. Consequently, the exhaust gas that has passed through the second SCR catalyst 12 comes to contain not only the NH₃ desorbed from the second SCR catalyst 12 but also the NH₃ desorbed from the SCR catalyst 11.

Accordingly, because the third nitrogen oxide sensor 23 responds to both the NH₃ desorbed from the second SCR catalyst 12 and the NH₃ desorbed from the SCR catalyst 11, the second-stage downstream concentration may become greater in value than the upstream and downstream concentrations.

In this case, because the third nitrogen oxide sensor 23 responds to NH₃, the output value of the third nitrogen oxide sensor 23 is excessively larger than the concentration of NOₓ contained in the exhaust gas that has passed through the second-stage exhaust purification device.

### Flow of Series of Processes Executed by the Exhaust Monitoring Apparatus 30 to Output the Second-Stage Downstream NOₓ Concentration

As described above, the exhaust monitoring apparatus 30 outputs the second-stage downstream NOₓ concentration in consideration of a case where the value output by the third nitrogen oxide sensor 23 is excessive. The second-stage downstream NOₓ concentration is a value output by the exhaust monitoring apparatus 30 as indicating the concentration of NOₓ contained in the exhaust gas that has passed through the second SCR catalyst 12.

Fig. 16 illustrates the flow of a series of processes executed when the exhaust monitoring apparatus 30 outputs the second-stage downstream NOₓ concentration. In the fifth embodiment, the exhaust monitoring apparatus 30 outputs the downstream NOₓ concentration, which is the concentration of nitrogen oxides contained in the exhaust gas that has passed through the SCR catalyst 11, in the manners shown in the first to fourth embodiments. The series of processes illustrated in Fig. 16 is executed by the processing circuitry 31 after the exhaust monitoring apparatus 30 acquires the second-stage downstream concentration and outputs the downstream NOₓ concentration.

Upon starting the series of processes illustrated in Fig. 16, the processing circuitry 31 first executes the process of S61. In the process of the S61, the processing circuitry 31 determines whether the acquired second-stage downstream concentration is less than or equal to a second-stage upper limit value.

When the second-stage downstream concentration exceeds the second-stage upper limit value during calculation of the second-stage downstream NOₓ concentration, the exhaust monitoring apparatus 30 of the fifth embodiment replaces the second-stage downstream concentration with the second-stage upper limit value. In the fifth embodiment, the second-stage upper limit value is the downstream NOₓ concentration.

When determining that the second-stage downstream concentration is less than or equal to the second-stage upper limit value in the process of S61 (S61: YES), the processing circuitry 31 advances the process to S62. In the process of S62, the processing circuitry 31 outputs the second-stage downstream concentration as the second-stage downstream NOₓ concentration. Then, the processing circuitry 31 terminates the series of processes illustrated in Fig. 16.

In this manner, when the acquired second-stage downstream concentration is less than or equal to the second-stage upper limit value, the exhaust monitoring apparatus 30 outputs the second-stage downstream concentration as the second-stage downstream NOₓ concentration.

When determining that the second-stage downstream concentration is greater than the second-stage upper limit value in the process of S61 (S61: NO), the processing circuitry 31 advances the process to S63. In the process of S63, the processing circuitry 31 outputs a processed second-stage concentration as the second-stage downstream NOₓ concentration. The processed second-stage concentration is a value obtained by replacing the second-stage downstream concentration with the second-stage upper limit value. In the fifth embodiment, the processed second-stage concentration is a value obtained by replacing the second-stage downstream concentration with the downstream NOₓ concentration. That is, in S63, the processing circuitry 31 outputs the downstream NOₓ concentration as the second-stage downstream NOₓ concentration. Then, the processing circuitry 31 terminates the series of processes illustrated in Fig. 16.

In this manner, when the acquired second-stage downstream concentration exceeds the second-stage upper limit value, the exhaust monitoring apparatus 30 outputs, as the second-stage downstream NOₓ concentration, the processed second-stage concentration obtained by replacing the second-stage downstream concentration with the second-stage upper limit value.

### Changes in the Downstream NOₓ Concentration and Second-Stage Downstream NOₓ Concentration

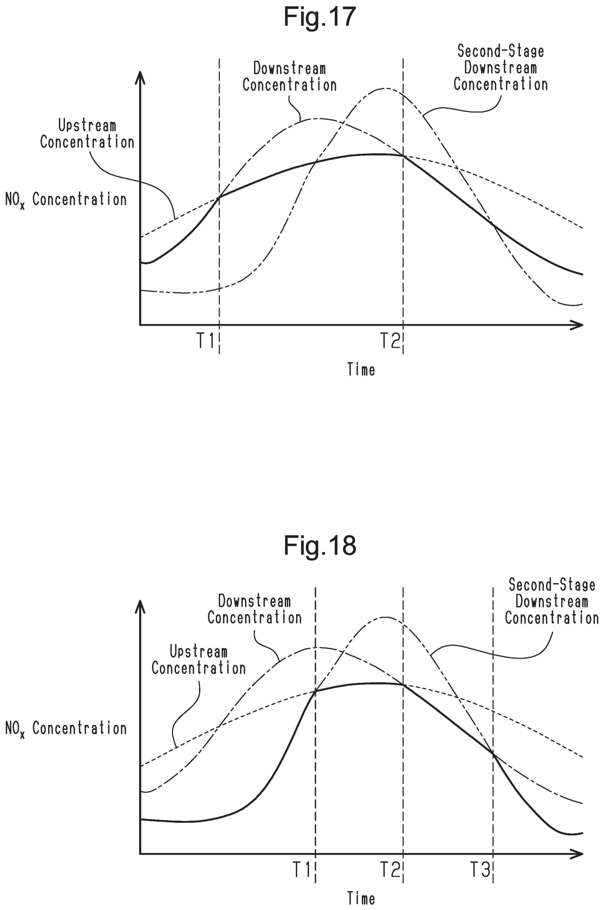

Fig. 17 illustrates an example of the changes in the downstream NOₓ concentration. Fig. 18 illustrates the changes in the second-stage downstream NOₓ concentration. In Figs. 17 and 18, the vertical axis represents the concentration of NOₓ, and the horizontal axis represents time.

Fig. 17 and Fig. 18 each illustrate the changes in the upstream concentration, the downstream concentration, and the second-stage downstream NOₓ concentration in the fourth example described with reference to Fig. 15. In Figs. 17 and 18, the upstream concentration is indicated by the broken line, the downstream concentration is indicated by the single-dashed line, and the second-stage downstream concentration is indicated by the double-dashed line.

Fig. 17 illustrates the changes in the downstream NOₓ concentration output by the exhaust monitoring apparatus 30 in the fourth example. In Fig. 17, the downstream NOₓ concentration output by the exhaust monitoring apparatus 30 is indicated by the solid line. In Fig. 17, the exhaust monitoring apparatus 30 outputs the downstream NOₓ concentration in the same manner as in the first embodiment. That is, in Fig. 17, the exhaust monitoring apparatus 30 outputs the downstream NOₓ concentration using, as the upper limit value, the upstream concentration output by the first nitrogen oxide sensor 21.

Until time T1 in Fig. 17, the downstream concentration remains less than or equal to the upstream concentration. Accordingly, when acquiring the upstream and downstream concentrations by time T1, the exhaust monitoring apparatus 30 determines that the downstream concentration is less than or equal to the upstream concentration (S11 in Fig. 4: YES). Then, the exhaust monitoring apparatus 30 outputs the downstream concentration as the downstream NOₓ concentration (S12 in Fig. 4). Thus, in Fig. 17, until time T1, the solid line indicating the downstream NOₓ concentration overlaps the single-dashed line indicating the changes in the downstream concentration.

From time T1 to time T2 in Fig. 17, the downstream concentration is higher than the upstream concentration. Accordingly, when acquiring the upstream and downstream concentrations from time T1 to time T2, the exhaust monitoring apparatus 30 determines that the downstream concentration is greater than the upstream concentration (S11 in Fig. 4: NO). Then, the exhaust monitoring apparatus 30 outputs the processed concentration as the downstream NOₓ concentration (S13 in Fig. 4). As described above, the processed concentration is a value obtained by replacing the downstream concentration with the upstream concentration, which corresponds to the upper limit value. Thus, in Fig. 17, from time T1 to time T2, the solid line indicating the downstream NOₓ concentration overlaps the broken line indicating the changes in the upstream concentration.

After time T2 in Fig. 17, the downstream concentration is less than or equal to the upstream concentration. Accordingly, when acquiring the upstream and downstream concentrations after time T2, the exhaust monitoring apparatus 30 determines that the downstream concentration is less than or equal to the upstream concentration (S11 in Fig. 4: YES). Then, the exhaust monitoring apparatus 30 outputs the downstream concentration as the downstream NOₓ concentration (S12 in Fig. 4). Thus, in Fig. 17, after time T2, the solid line indicating the downstream NOₓ concentration overlaps the single-dashed line indicating the changes in the downstream concentration.

Fig. 18 illustrates the changes in the second-stage downstream concentration output by the exhaust monitoring apparatus 30 in the fourth example. In Fig. 18, the second-stage downstream concentration output by the exhaust monitoring apparatus 30 is indicated by the solid line.

Until time T1 in Fig. 18, the second-stage downstream concentration remains less than or equal to the upstream concentration. Until time T1 in Fig. 18, the second-stage downstream concentration remains less than or equal to the downstream concentration. That is, until time T1 in Fig. 18, the second-stage downstream concentration remains less than or equal to the downstream NOₓ concentration shown in Fig. 17. Accordingly, when calculating the downstream NOₓ concentration and acquiring the second-stage downstream concentration by time T1, the exhaust monitoring apparatus 30 determines that the second-stage downstream concentration is less than or equal to the second-stage upper limit value (S61: YES). Then, the exhaust monitoring apparatus 30 outputs the second-stage downstream concentration as the second-stage downstream NOₓ concentration (S62). Thus, in Fig. 18, until time T1, the solid line indicating the second-stage downstream NOₓ concentration overlaps the double-dashed line indicating the changes in the second-stage downstream concentration.

From time T1 to time T2 in Fig. 18, the downstream concentration is higher than the upstream concentration. Accordingly, from time T1 to time T2 in Fig. 18, the downstream NOₓ concentration is equal to the upstream concentration. From time T1 to time T2 in Fig. 18, the second-stage downstream concentration is higher than the upstream concentration. That is, from T1 to T2 in Fig. 18, the second-stage downstream concentration is greater than the downstream NOₓ concentration shown in Fig. 17. Accordingly, when calculating the downstream NOₓ concentration and acquiring the second-stage downstream concentration from time T1 to T2, the exhaust monitoring apparatus 30 determines that the second-stage downstream concentration is greater than the second-stage upper limit value (S61: NO). Then, the exhaust monitoring apparatus 30 outputs the processed second-stage concentration as the second-stage downstream NOₓ concentration (S63). As described above, the processed second-stage concentration is a value obtained by replacing the second-stage downstream concentration with the downstream NOₓ concentration, which is the second-stage upper limit value. Thus, in Fig. 18, from time T1 to time T2, the solid line indicating the second-stage downstream NOₓ concentration overlaps the broken line indicating the changes in the upstream concentration.

From time T2 to time T3 in Fig. 18, the downstream concentration is smaller than the upstream concentration. Accordingly, from time T2 to time T3 in Fig. 18, the downstream NOₓ concentration is equal to the downstream concentration. From time T2 to time T3 in Fig. 18, the second-stage downstream concentration is higher than the downstream concentration. That is, from T2 to T3 in Fig. 18, the second-stage downstream concentration is greater than the downstream NOₓ concentration shown in Fig. 17. Accordingly, when calculating the downstream NOₓ concentration and acquiring the second-stage downstream concentration from time T2 to T3, the exhaust monitoring apparatus 30 determines that the second-stage downstream concentration is greater than the second-stage upper limit value (S61: NO). Then, the exhaust monitoring apparatus 30 outputs the processed second-stage concentration as the second-stage downstream NOₓ concentration (S63). As described above, the processed second-stage concentration is a value obtained by replacing the second-stage downstream concentration with the downstream NOₓ concentration, which is the second-stage upper limit value. Thus, in Fig. 18, from time T2 to time T3, the solid line indicating the second-stage downstream NOₓ concentration overlaps the single-dashed line indicating the changes in the downstream concentration.

After time T3 in Fig. 18, the second-stage downstream concentration is less than or equal to the upstream and downstream concentrations. That is, after time T3 in Fig. 18, the second-stage downstream concentration is less than or equal to the downstream NOₓ concentration shown in Fig. 17. Accordingly, when calculating the downstream NOₓ concentration and acquiring the second-stage downstream concentration after time T3, the exhaust monitoring apparatus 30 determines that the second-stage downstream concentration is less than or equal to the second-stage upper limit value (S61: YES). Then, the exhaust monitoring apparatus 30 outputs the second-stage downstream concentration as the second-stage downstream NOₓ concentration (S62). Thus, in Fig. 18, after time T3, the solid line indicating the second-stage downstream NOₓ concentration overlaps the double-dashed line indicating the changes in the second-stage downstream concentration.

### Operation and Advantages of the Fifth Embodiment

(5-1) The exhaust monitoring apparatus 30 of the fifth embodiment achieves advantages (1-1) and (1-2) in the first embodiment.

(5-2) The exhaust system 40 includes the second SCR catalyst 12. The second SCR catalyst 12 is the second-stage exhaust purification device that is disposed downstream of the SCR catalyst 11 (i.e., the exhaust purification device) in the exhaust pipe 13 and removes nitrogen oxides contained in the exhaust gas that has passed through the SCR catalyst 11. The exhaust system 40 includes the third nitrogen oxide sensor 23. The third nitrogen oxide sensor 23 is a second-stage nitrogen oxide sensor that is installed downstream of the second SCR catalyst 12 (i.e., the second-stage exhaust purification device) in the exhaust pipe 13 and measures the concentration of nitrogen oxides contained in the exhaust gas that has passed through the second SCR catalyst 12. The exhaust monitoring apparatus 30 is configured to acquire the second-stage downstream concentration, which is the output value of the third nitrogen oxide sensor 23. When the second-stage downstream concentration is less than or equal to the second-stage upper limit value calculated based on the downstream NOₓ concentration, which is the output value indicating the concentration of nitrogen oxides contained in the exhaust gas that has passed through the exhaust purification device, the processing circuitry 31 calculates the second-stage downstream concentration as the value indicating the concentration of nitrogen oxides contained in the exhaust gas that has passed through the second-stage exhaust purification device. When the second-stage downstream concentration exceeds the second-stage upper limit value, the processing circuitry 31 calculates the processed second-stage concentration, which is obtained by replacing the second-stage downstream concentration with the second-stage upper limit value, as the value indicating the concentration of nitrogen oxides contained in the exhaust gas that has passed through the second-stage exhaust purification device.

The concentration of nitrogen oxides contained in the exhaust gas that has passed through the second SCR catalyst 12, which is the second-stage exhaust purification device, is lower than the processed concentration in the exhaust purification device, which is located upstream of the second-stage exhaust purification device. The exhaust monitoring apparatus 30 corrects the output value of the third nitrogen oxide sensor 23, which is the second-stage nitrogen oxide sensor, using a value calculated based on the processed concentration as the second-stage upper limit value. This allows the exhaust monitoring apparatus 30 to prevent an excessively large output value from being obtained from the second-stage nitrogen oxide sensor.

### Sixth Embodiment

The vehicle 50 including the exhaust monitoring apparatus 30 according to a sixth embodiment will now be described with reference to the drawings. The sixth embodiment is different from the first embodiment in that the exhaust system 40 includes the second-stage exhaust purification device. The sixth embodiment is different from the fifth embodiment in that the exhaust monitoring apparatus 30 uses, as the upper limit value, not the downstream NOₓ concentration, but a value obtained by reflecting the purification efficiency of the second-stage exhaust purification device on the downstream NOₓ concentration. The following description focuses on differences from the fifth embodiment, and identical portions are briefly described or omitted.

### Flow of Series of Processes Executed by the Exhaust Monitoring Apparatus 30 to Output the Second-Stage Downstream NOₓ Concentration

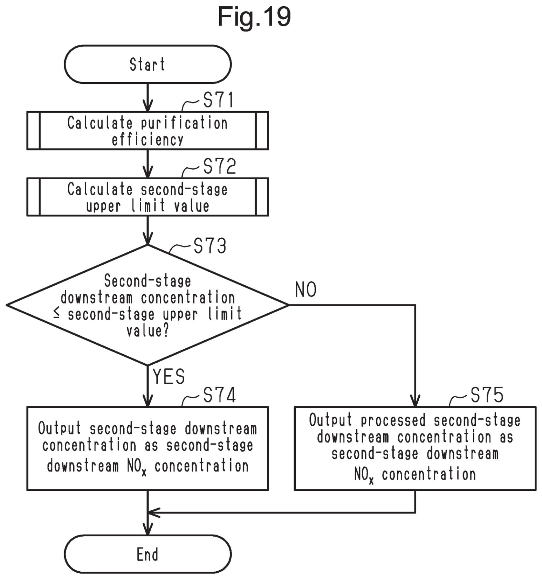

Fig. 19 illustrates the flow of a series of processes executed when the exhaust monitoring apparatus 30 outputs the second-stage downstream NOₓ concentration. In the sixth embodiment, the exhaust monitoring apparatus 30 outputs the downstream NOₓ concentration, which is the concentration of nitrogen oxides contained in the exhaust gas that has passed through the SCR catalyst 11, in the manners shown in the first to fourth embodiments. The series of processes illustrated in Fig. 19 is executed by the processing circuitry 31 after the exhaust monitoring apparatus 30 acquires the second-stage downstream concentration and outputs the downstream NOₓ concentration.

Upon starting the series of processes illustrated in Fig. 19, the processing circuitry 31 first executes the process of S71. In the process of S71, the processing circuitry 31 calculates the purification efficiency of the second SCR catalyst 12. The processing circuitry 31 calculates the purification efficiency of the second SCR catalyst 12 in the manner described with reference to Fig. 8.

Subsequently, the processing circuitry 31 executes the process of S72. In the process of S72, the processing circuitry 31 calculates the second-stage upper limit value.

In the sixth embodiment, the exhaust monitoring apparatus 30 uses, as the second-stage upper limit value, a value obtained by reflecting the purification efficiency of the second SCR catalyst 12 on the downstream NOₓ concentration. The processing circuitry 31 calculates, as the second-stage upper limit value in the process of S72, a value obtained by subtracting the product of the downstream NOₓ concentration and the purification efficiency of the second SCR catalyst 12 from the downstream NOₓ concentration. Then, the processing circuitry 31 advances the process to S73.

In the process of S73, the processing circuitry 31 determines whether the acquired second-stage downstream concentration is less than or equal to the second-stage upper limit value calculated in the process of S72.

When determining that the second-stage downstream concentration is less than or equal to the second-stage upper limit value in the process of S73 (S73: YES), the processing circuitry 31 advances the process to S74. In the process of S74, the processing circuitry 31 outputs the second-stage downstream concentration as the second-stage downstream NOₓ concentration. Then, the processing circuitry 31 terminates the series of processes illustrated in Fig. 19.

In this manner, when the acquired second-stage downstream concentration is less than or equal to the second-stage upper limit value, the exhaust monitoring apparatus 30 outputs the second-stage downstream concentration as the second-stage downstream NOₓ concentration.

When determining that the second-stage downstream concentration is greater than the second-stage upper limit value in the process of S73 (S73: NO), the processing circuitry 31 advances the process to S75. In the process of S75, the processing circuitry 31 outputs the processed second-stage concentration as the second-stage downstream NOₓ concentration. The processed second-stage concentration is a value obtained by replacing the second-stage downstream concentration with the second-stage upper limit value. In the sixth embodiment, the processed second-stage concentration is a value obtained by replacing the second-stage downstream concentration with the second-stage upper limit value calculated in the process of S72. Then, the processing circuitry 31 terminates the series of processes illustrated in Fig. 19.

In this manner, when the acquired second-stage downstream concentration exceeds the second-stage upper limit value, the exhaust monitoring apparatus 30 outputs the processed second-stage concentration, which is obtained by replacing the second-stage downstream concentration with the second-stage upper limit value, as the second-stage downstream NOₓ concentration.

### Operations and Advantages of Sixth Embodiment

(6-1) The exhaust monitoring apparatus 30 of the sixth embodiment achieves advantages (1-1) and (1-2) in the first embodiment.

(6-2) The exhaust monitoring apparatus 30 of the sixth embodiment achieves advantage (5-2) in the fifth embodiment.

(6-3) In the exhaust monitoring apparatus 30 of the sixth embodiment, the processing circuitry 31 calculates the second-stage upper limit value based on the nitrogen oxide purification efficiency of the second SCR catalyst 12, which is the second-stage exhaust purification device. The calculation is also based on the downstream NOₓ concentration output as the value indicating the concentration of nitrogen oxides contained in the exhaust gas that has passed through the SCR catalyst 11, which is the exhaust purification device.

The exhaust monitoring apparatus 30 reflects the purification efficiency of the second-stage exhaust purification device on the second-stage upper limit value. This allows the exhaust monitoring apparatus 30 to prevent an excessively large output value from being obtained from the second-stage nitrogen oxide sensor.

### Modifications

The above embodiments may be modified as described below. The above embodiments and the following modifications can be combined as long as the combined modifications remain technically consistent with each other.

In the first and second embodiments, the exhaust monitoring apparatus 30 uses the output value of the first nitrogen oxide (i.e., upstream nitrogen oxide) sensor 21 as the upstream concentration. Further, in the third and fourth embodiments, the exhaust monitoring apparatus 30 uses the estimated value as the upstream concentration.

The value used as the upstream concentration by the exhaust monitoring apparatus 30 is not limited to that in the above embodiments. For example, the exhaust monitoring apparatus 30 may use a constant value as the upstream concentration. For example, the exhaust monitoring apparatus 30 may use, as the upstream concentration, a maximum value of the concentration of NOₓ that can be contained in the exhaust gas discharged from the diesel engine 10.

In the second, fourth, and sixth embodiments, the exhaust monitoring apparatus 30 calculates the purification efficiency of the SCR catalyst 11 or the second SCR catalyst 12 in the manner shown in Fig. 8. The exhaust monitoring apparatus 30 does not have to calculate the purification efficiency in the manner described in the above embodiments. For example, the exhaust monitoring apparatus 30 may use a constant value as the purification efficiency. Further, the exhaust monitoring apparatus 30 may calculate the purification efficiency using the deterioration rates of the SCR catalyst 11 and the second SCR catalyst 12 as parameters in addition to the catalyst temperature and the flow rate of exhaust gas shown in Fig. 8.

In the fifth and sixth embodiments, the exhaust monitoring apparatus 30 outputs the second-stage downstream NOₓ concentration, using the upper limit value calculated based on the downstream NOₓ concentration. The exhaust monitoring apparatus 30 does not have to output the second-stage downstream NOₓ concentration in the manner described in the above embodiments. For example, the exhaust monitoring apparatus 30 may calculate, as the second-stage downstream NOₓ concentration, the product of the upstream concentration, a value obtained by subtracting the purification efficiency of the SCR catalyst 11 from 1, and a value obtained by subtracting the purification efficiency of the second SCR catalyst 12 from 1.

In the first to sixth embodiments, the exhaust purification device and the second-stage exhaust purification device are SCR catalysts. The exhaust purification device and the second-stage exhaust purification device may be three-way catalysts. Further, the vehicle 50 may include a gasoline engine instead of the diesel engine 10.

When the exhaust purification device is a three-way catalyst, a relatively rich air-fuel ratio in the exhaust gas causes NH₃ to be generated on the three-way catalyst. Accordingly, even when the exhaust purification device is a three-way catalyst, the changes in the upstream concentration, downstream concentration, and second-stage downstream concentration may occur in the manner shown in Fig. 3 or Fig. 15. Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. An exhaust monitoring apparatus (30) in an exhaust system (40), the exhaust system (40) including an exhaust purification device (11) disposed in an exhaust pipe (13) of an engine (10) and configured to remove nitrogen oxides contained in exhaust gas, and a nitrogen oxide sensor (22) disposed downstream of the exhaust purification device (11) in the exhaust pipe (13) and configured to measure a concentration of nitrogen oxides contained in exhaust gas that has passed through the exhaust purification device (11), wherein
the exhaust monitoring apparatus (30) is configured to acquire:
an upstream concentration that is a concentration of nitrogen oxides contained in exhaust gas flowing into the exhaust purification device (11); and
a downstream concentration that is an output value of the nitrogen oxide sensor (22), and
the exhaust monitoring apparatus (30) comprises processing circuitry (31) configured to:
when the downstream concentration is less than or equal to an upper limit value calculated based on the upstream concentration, output the downstream concentration as a value indicating the concentration of the nitrogen oxides contained in the exhaust gas that has passed through the exhaust purification device (11); and
when the downstream concentration is greater than the upper limit value, output a processed concentration as the value indicating the concentration of the nitrogen oxides contained in the exhaust gas that has passed through the exhaust purification device (11), the processed concentration being obtained by replacing the downstream concentration with the upper limit value.

2. The exhaust monitoring apparatus (30) according to claim 1, wherein
the processing circuitry (31) is configured to calculate the upper limit value based on a nitrogen oxide purification efficiency of the exhaust purification device (11) and the upstream concentration.

3. An exhaust monitoring apparatus (30) in an exhaust system (40), the exhaust system (40) including an exhaust purification device (11) disposed in an exhaust pipe (13) of an engine (10) and configured to remove nitrogen oxides contained in exhaust gas, and a nitrogen oxide sensor (22) disposed downstream of the exhaust purification device (11) in the exhaust pipe (13) and configured to measure a concentration of nitrogen oxides contained in exhaust gas that has passed through the exhaust purification device (11), wherein
the exhaust monitoring apparatus (30) is configured to acquire a downstream concentration that is an output value of the nitrogen oxide sensor (22), and
the exhaust monitoring apparatus (30) comprises processing circuitry (31) configured to:
when the downstream concentration is less than or equal to an upper limit value calculated based on a purification efficiency of the exhaust purification device (11), output the downstream concentration as a value indicating the concentration of the nitrogen oxides contained in the exhaust gas that has passed through the exhaust purification device (11); and
when the downstream concentration is greater than the upper limit value, output a processed concentration as the value indicating the concentration of the nitrogen oxides contained in the exhaust gas that has passed through the exhaust purification device (11), the processed concentration being obtained by replacing the downstream concentration with the upper limit value.

4. The exhaust monitoring apparatus (30) according to any one of claims 1 to 3, wherein
the exhaust system (40) further includes:
a second-stage exhaust purification device (12) disposed downstream of the exhaust purification device (11) in the exhaust pipe (13) and configured to remove nitrogen oxides contained in exhaust gas that has passed through the exhaust purification device (11); and
a second-stage nitrogen oxide sensor (23) disposed downstream of the second-stage exhaust purification device (12) in the exhaust pipe (13) and configured to measure a concentration of nitrogen oxides contained in exhaust gas that has passed through the second-stage exhaust purification device (12),
the exhaust monitoring apparatus (30) is configured to acquire a second-stage downstream concentration that is an output value of the second-stage nitrogen oxide sensor (23), and
the processing circuitry (31) is configured to:
when the second-stage downstream concentration is less than or equal to a second-stage upper limit value calculated based on an output value indicating the concentration of the nitrogen oxides contained in the exhaust gas that has passed through the exhaust purification device (11), output the second-stage downstream concentration as the value indicating the concentration of the nitrogen oxides contained in the exhaust gas that has passed through the second-stage exhaust purification device (12); and
when the second-stage downstream concentration is greater than the upper limit value, output a processed second-stage concentration as the value indicating the concentration of the nitrogen oxides contained in the exhaust gas that has passed through the second-stage exhaust purification device (12), the processed second-stage concentration being obtained by replacing the second-stage downstream concentration with the second-stage upper limit value.

5. The exhaust monitoring apparatus (30) according to claim 4, wherein
the processing circuitry (31) is configured to calculate the second-stage upper limit value based on a nitrogen oxide purification efficiency of the second-stage exhaust purification device (12) and the output value indicating the concentration of the nitrogen oxides contained in the exhaust gas that has passed through the exhaust purification device (11).

6. The exhaust monitoring apparatus (30) according to any one of claims 1 to 5, wherein
the upstream concentration is an output value of an upstream nitrogen oxide sensor (21) disposed upstream of the exhaust purification device (11) in the exhaust pipe (13) and configured to measure a concentration of nitrogen oxides contained in exhaust gas that has passed through the second-stage exhaust purification device (11).

7. The exhaust monitoring apparatus (30) according to any one of claims 1 to 6, wherein
the upstream concentration is an estimated value calculated based on a rotation speed of the engine (10) and a fuel injection amount.

8. An exhaust monitoring method for an exhaust system (40), the exhaust system (40) including an exhaust purification device (11) disposed in an exhaust pipe (13) of an engine (10) and configured to remove nitrogen oxides contained in exhaust gas, and a nitrogen oxide sensor (22) disposed downstream of the exhaust purification device (11) in the exhaust pipe (13) and configured to measure a concentration of nitrogen oxides contained in exhaust gas that has passed through the exhaust purification device (11), the exhaust monitoring method comprising:
acquiring an upstream concentration that is a concentration of nitrogen oxides contained in exhaust gas flowing into the exhaust purification device (11);
acquiring a downstream concentration that is an output value of the nitrogen oxide sensor (22);
when the downstream concentration is less than or equal to an upper limit value calculated based on the upstream concentration, outputting the downstream concentration as a value indicating the concentration of the nitrogen oxides contained in the exhaust gas that has passed through the exhaust purification device (11); and
when the downstream concentration is greater than the upper limit value, outputting a processed concentration as the value indicating the concentration of the nitrogen oxides contained in the exhaust gas that has passed through the exhaust purification device (11), the processed concentration being obtained by replacing the downstream concentration with the upper limit value.
